# EUROPEAN PATENT SPECIFICATION

(11) **EP 0 644 857 B1**
(45) Date of publication and mention of the grant of the patent: **10.09.1997**
(21) Application number: 93916278.0
(22) Date of filing: 10.06.1993
(51) Int. Cl.: C02F 3/04, B01D 53/00

(54) **METHOD FOR TREATING WATER**
VERFAHREN FÜR DIE BEHANDLUNG VON WASSER
PROCEDE DE TRAITEMENT D'EAU

(30) Priority: 12.06.1992 EP 92201741
(43) Date of publication of application: 29.03.1995
(73) Proprietor: ECOTECHNIEK B.V., NL-3527 HS Utrecht (NL)
(72) Inventor: KOSTER, Iman, Willem, NL-6721 VM Bennkom (NL); VIS, Petrus, Ignatius, Maria, NL-3515 XJ Utrecht (NL)
(74) Representative: de Bruijn, Leendert C.
(86) International application number: NL9300126
(87) International publication number: WO9325483

(56) References cited:
- EP-A- 0 100 024
- EP-A- 0 274 986
- EP-A- 0 442 157
- GB-A- 446 066

## Description

The invention relates to a treatment installation consisting of one or more compartments connected in parallel, which compartments are provided with inlets and outlets and contain a filling of a support material, on which and between which microorganisms are present, as well as a method for treating water.

Installations of this type are generally known and are used on a large scale. Good results are obtained with an installation of this type, but said installations are not suitable for all types of pollutant.

Xenobiotic components which are present in waste water are frequently removed with the aid of filtration using active charcoal. Volatile components can also be removed from the aqueous phase by stripping. In this case it is necessary to subject the stripping air released to a subsequent treatment. This can be effected by means of an active charcoal filter.

When xenobiotic components are removed from waste water by means of active charcoal filtration or stripping and when removing said components from the air phase, pollutant is transferred from one phase to another phase in these techniques. The phase in which the pollutant is bound, frequently active charcoal, still has to be treated afterwards in order to decompose pollutants.

Biological purification techniques do not have this disadvantage; in these systems pollutants are completely converted into harmless residual products, such as biomass, CO₂ and water.

Biological purification techniques can roughly be subdivided into systems with suspended biomass and systems in which the biomass firmly adheres to the support material.

One example of a biological purification technique in which use is made of suspended biomass for biological purification of waste water is an active sludge installation. This has the disadvantage that for low concentrations of pollutant the amount of biomass produced per volume of waste water treated is small. However, a high biomass concentration in the installation is required for a high removal capacity. At low pollutant concentrations a long sludge retention time is therefore required. This is difficult to realise in active sludge installations.

Ground water which is released during soil treatment work frequently contains low (that is to say low in the absolute sense) concentrations of pollutants; however, the concentrations are still too high and the ground water therefore has to be treated before discharge.

In bioreactors containing a support material, so-called biofilm reactors, there is a slime layer on the support material. This is the so-called biofilm, in which microorganisms are immobilised. In biofilm reactors it is possible to maintain a high biomass concentration at low pollutant concentrations.

Oxygen is required for aerobic biological removal of organic pollutants. Because oxygen is not present in sufficient amounts in the waste water it is necessary to supply additional air to the bioreactor. In this context it is possible that if the oxygen is supplied to the system in the form of aeration some of the volatile pollutants are removed via the air phase, so that the discharged process air has to be subsequently treated.

The invention lies in the field of water purification, in particular removal of organic pollutants from polluted water. EP-A-0.100.024, GB-A-0.446.066 and EP-A-0.274.986 are directed at the field of gas purification. EP-A-0.100.024 and GB-A-0.446.066 disclose a biofilter with downflow purification. EP-A-0.274.986 does not specify a preferred mode of operation be it either downflow or upflow. EP-A-0.442.157 discloses purification of water and gas whereby the water and air to be treated are fed in at the bottom of the system. The air to water ratio is illustrated as being anywhere between 2-10 and this system thus has the disadvantage of requiring a high air to water ratio which is undesirable for purifying water. When purifying water the maximum amount of water is required to be carried through the system in the shortest possible time whilst still retaining high purification efficiency but concomitantly keeping the energy costs for pumping through air as low as possible.

An installation of the type described in the preamble has now been found which is characterised in that the installation is constructed in such a way that both polluted air and water are passed downwards through the support material with a hydraulic surface loading selected between 0.5-30 m³/m²/h, the pollutants being converted by the microorganisms in the biofilm on the support material, and during this operation air forms the continuous phase.

The support material can, for example, consist of sand; the microorganisms are then present both on the grains of sand, in the form of a biofilm, and between the grains of sand, in the form of sludge flocks. The support material therefore also acts as a filter.

In the case of the biological aerobic system present here, the pollutants are completely converted and subsequent treatment of both effluent and process air can be dispensed with. It is, of course, advantageous to provide the installation with a facility for rinsing the filter material, because the growth of biomass and any chemical precipitates formed reduces the capacity for flow through the filter bed. This installation and the method made possible by means of said installation have a number of advantages compared with other biofilm reactors (such as biorotor, oxidation bed, submerged filter).
1) As a result of the correct choice of the support material the installation has a high specific biofilm surface area. Consequently it is possible to maintain a high biomass concentration in the installation and thus to achieve a high removal capacity.
2) Water and air are fed through the reactor in plug flow. By this means a reduction in the removal capacity as a result of diffusion limitation is counteracted.
3) As a result of the intense contact between air and water very good mass transfer between the air and the water phase is possible, so that the installation has a high aeration capacity. If the installation is used for the treatment of effluent, this signifies that the air/water ratio required is low.
4) By passing water and air in co-current through the reactor, the discharging process air is in equilibrium with the effluent concentration of the treated waste water. In the case of an installation functioning normally, the effluent contains very low pollutant concentrations. The concentrations in the discharging process air are therefore also very low, so that the air does not have to be subsequently treated.

As a result of these advantages it is possible for the treatment process to proceed in an optimum manner.

The fill material is important in order to obtain a plug flow character. Of course, there is only approximate plug flow. Ideal systems have, after all, not been realised in practice. In order to retain the plug flow character it is therefore clear that finely divided support material must be used in the reactor. The finely divided material can, for example, be fine sand. The plug flow character will be less in the case of coarser material.

The effect of the downward passage through the system is that air is the continuous phase. If passage were upwards the air would pass through the system in the form of bubbles with the concomitant disadvantages.

The water is preferably supplied in finely divided form and therefore, for example, with the aid of a spray element.

Suitable support materials are, inter alia, sand, anthracite (which is then in the form of flat platelets) and active charcoal.

A system for removal of chemical precipitates from the liquid phase can be connected upstream of the biological reactor(s). It is also possible to install facilities for subsequent treatment of discharging water and/or air streams downstream of the installations, for those cases where it is desired to achieve even greater purification.

As a consequence of the conversion of the pollutants by the microorganisms into biomass and the oxidation of iron, accumulation of biomass and iron oxide takes place in the bioreactor. At a specific pressure drop over the bioreactor, the excess biomass and the precipitated inorganic material (inter alia iron oxide) are removed from the filter bed by rinsing the filter bed.

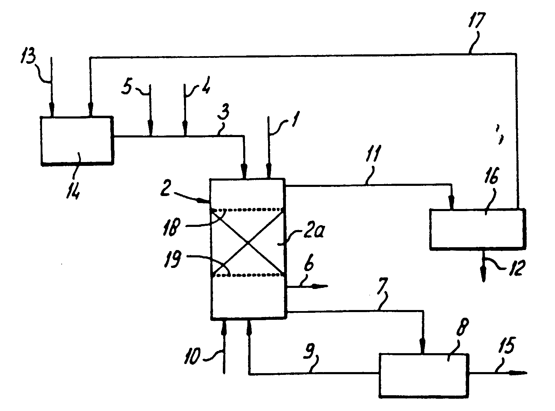

The invention is illustrated in the Figure which shows an installation for the treatment of (ground) water. The invention is illustrated in the Figure which shows an installation for treatment of (ground) water. Influent is supplied via (13) and collected in a buffer vessel (14). The buffer vessel is advantageously designed as an oil/sand separator. The influent is fed via (3) into the top of the bioreactor (2). Connections, shown here as (4) and (5), to line (3) are provided for the addition of nutrients and/or a neutralising liquid. Polluted air is introduced via (1) into the top of the reactor (2). It will also be obvious that the air supply can also be connected to line (3). An active sludge on support material (2a) is present in the bioreactor (2). Microorganisms which convert the pollutants into biomass, CO₂ and H₂O are present on and between the support material. The water is collected at the bottom of the reactor and process air is discharged via (6) into the atmosphere. The water is fed via (7) to the (clean water) buffer vessel (8) and discharged via (15). Lines 9, 10 and 11 are closed during normal operation.

When the filter bed is rinsed, the supply and discharge of effluent via (3) and (7) and air via (1) and (6) are shut off. Water from the clean water buffer vessel (8) is passed upwards through the filter via (9) together with air via (10). The rinse water (and rinse air) is removed via (11) to a sludge buffer vessel (16). After settling, the sludge is periodically removed via (12). The excess rinse water is discharged via (17) to the influent buffer vessel (14).

If the specific gravity of the support material is not much higher (or lower) than that of water, a grating (18) is placed just below the rinse water discharge so that the support material is not flushed out during rinsing. Preferably, the bottom of the support material is supported on a grating (19).

The installation as shown in the Figure can also be used for cleaning effluent only. In place of polluted air, clean air is then fed to the bioreactor via (1).

Ground water frequently contains high concentrations of divalent iron. These must be removed before the customary treatment techniques are able to function correctly. A dry filter (that is to say a filter which is not under water) is used as iron-removal stage for the production of drinking water. Thus, in the installation according to the invention two removal techniques take place at the same time; the pollutants are converted by the microorganisms into harmless residual products and at the same time iron is oxidised to trivalent iron, which remains behind as iron oxide in the dry filter. This iron oxide accumulates in the dry filter and can be removed by rinsing.

In practice, rinsing will be carried out when a specific additional pressure drop has arisen, for example of 1 bar. Iron and excess biomass are flushed out during rinsing.

The bioreactor can be constructed in such a way that it is accessible via a manhole at the top.

When the bioreactor according to the invention is used for water treatment, the air/water ratio (the feed) is preferably at least 1:10 and not more than 1:1, with most preference for a ratio from 3:10 to 5:10.

The water treatment can be used, inter alia, when treating polluted soil. When withdrawing ground water alone, both the volatile and the non-volatile components are removed. When withdrawing both ground air and ground water, a large proportion of the volatile pollutants are removed via the ground air and the remaining volatile compounds are removed together with the non-volatile compounds with the ground water. Volatile compounds which can be removed from the soil in this way and broken down biologically in the invention are, inter alia, the lighter weight fraction of mineral oils, benzene, toluene, ethylbenzene, xylene and naphthalene. The non-volatile components which are removed from the soil in this way are, inter alia, phenol, the heavier fraction of the mineral oils and some of the polycyclic aromatic compounds.

When operating a bioreactor according to the invention the following preconditions must be met characterized in that both polluted water and air are passed downwards through the support material with air forming the continuous phase such that the air:water ratio is not more than 1:1 with the hydraulic surface loading of the apparatus being selected between 0.5-30 m³/m²/h and with the support material being selected such that an approximately plug flow character of the process is obtained, said method optionally including a rinsing step of the support material at a specific pressure drop over the bioreactor thereby removing excess biomass and precipitated inorganic material. In addition it is preferable to meet one or more of the following preconditions in order to achieve complete removal of the pollutants. These conditions are:
1. The air/water ratio must be at least 0.1
2. The hydraulic residence time based on the volume of water present is between 1 and 10 minutes, preferably between 1.5 and 3 minutes
3. the organic loading is lower than the removal capacity.

For the hydraulic surface loading based on the volume of water present a preference is expressed for a value between 5-15 m³/m²/h for water purification, in particular for groundwater purification. For air purification a value higher than 20 m³/m²/h is acceptable.

The maximum value of the air/water ratio for water purification with a bioreactor according to the invention is 1 and a preference is expressed for a value between 0.3-0.5.

If the third condition is not met and/or if components which are impossible or very difficult to break down biologically are also present in the streams to be treated, the installation can be used for pretreatment in order to lessen the load on the downstream physical/chemical treatment.

The invention is illustrated with reference to the following example, which must not be considered as being restrictive.

### Example

### Ground water treatment

Ground water which is polluted with aromatic compounds (5 mg/l) is pumped up in an amount of 20 m³/h. This ground water is fed into an installation according to the Figure, the water flow rate being 20 m³/h and the air flow rate 10 m³/h. The bioreactor used has a bed volume of 4 m³ (surface area 2 m²). The support used is sand with a particle size of 1.5-2.5 mm.

The organic loading is 100 g/h. The oxygen demand can be calculated as a maximum of 3.5 grams of O₂ per gram of aromatic compound. This brings the oxygen demand to 350 g/h. Air contains ± 250 g of O₂ per m³. The minimum requisite air flow rate here is 1.4 m³/h.

The water which is discharged at (15) no longer contains a detectable amount of aromatic compounds.

### Legend for the references in the figures

- 1.: (polluted) air feed
- 2.: bioreactor
- 2a.: support material
- 3.: (polluted) water feed
- 4/5.: nutrient/neutralising liquid feed
- 6.: treated air discharge
- 7.: treated water discharge
- 8.: buffer vessel
- 9.: rinse water feed
- 10.: rinse air feed
- 11.: rinse water and rinse air discharge
- 12.: sludge discharge
- 13.: polluted water inlet
- 14.: influent buffer vessel
- 15.: treated water discharge
- 16.: sludge buffer vessel
- 17.: rinse water discharge
- 18.: grating (top)
- 19.: grating (bottom)

## Claims

1. A method of biological purification of water comprising passing polluted water through support material of an apparatus provided with aeration and one or more compartments connected in parallel, which compartments are provided with inlets and outlets and contain a filling of a support material on which and between which microorganisms are present, the pollutants being converted by microorganisms in the biofilm on the support material, characterized in that both polluted water and air are passed downwards through the support material with air forming the continuous phase such that the air:water ratio is not more than 1:1 with the hydraulic surface loading of the apparatus being selected between 0.5-30 m³/m²/h and with the support material being selected such that an approximately plug flow character of the process is obtained, said method optionally including a rinsing step of the support material at a specific pressure drop over the bioreactor thereby removing excess biomass and precipitated inorganic material.

2. Process according to claim 1 wherein the support material through which the water to be purified is passed has a high specific biofilm surface area enabling intense contact between air and water.

3. A method according to claim 1 or 2 wherein the water to be purified is passed through support material that is finely divided, said material for example being sand, anthracite or active charcoal, preferably sand.

4. A method according to any of the preceding claims wherein the water to be purified is passed through support material which is sand with a particle size of 1½ mm - 2½ mm.

5. A method according to any of the preceding claim, wherein the air/water ratio is between 0.1-0.5, preferably between 0.3-0.5.

6. A method according to any of the preceding claims, wherein the hydraulic surface loading based on the volume of water present is between 5-15 m³/m²/h.

7. A method according to any of the preceding claims, wherein the organic loading is lower than the removal capacity.

8. A method according to any of the preceding claims wherein the hydraulic residence time is between 1 and 10 minutes, preferably between 1.5 and 3 minutes.

9. A method according to any of the preceding claims wherein the water to be purified is ground water.

10. A method according to any of the preceding claims wherein volatile compounds to be removed in this way are the lighter weight fraction of mineral oils, benzene, toluene, ethylbenzene, xylene and naphthalene.

11. A method according to any of the preceding claims wherein the non-volatile components which are to be removed from are phenol, the heavier fraction of mineral oils and some of the polycyclic aromatic compounds.

## Patentansprüche

1. Verfahren zur biologischen Reinigung von Wasser, bei dem verschmutztes Wasser durch Trägermaterial einer Vorrichtung hindurchgeleitet wird, die mit einer Belüftungsanordnung und einer oder mehreren parallel verbundenen Kammer(n) versehen ist, die Einlässe und Auslässe aufweist(aufweisen) und eine Füllung aus einem Trägermaterial enthält(enthalten), auf dem und zwischen dem sich Mikroorganismen befinden, wobei die Schmutzstoffe von Mikroorganismen in dem Biofilm auf dem Trägermaterial konvertiert werden, dadurch gekennzeichnet, daß sowohl verschmutztes Wasser als auch Luft, wobei Luft die zusammenhängende Phase bildet, nach unten durch das Trägermaterial derart hindurchgeleitet werden, daß das Luft:Wasser-Verhältnis nicht größer als 1:1 ist, daß die hydraulische Flächenbelastung der Vorrichtung zwischen 0,5 und 30 m³/m²/h gewählt wird und daß das Trägermaterial so gewählt wird, daß näherungsweise ein Pfropfenströmungsverhalten des Verfahrens erhalten wird, wobei das Verfahren fakultativ einen Spülschritt für das Trägermaterial bei einem spezifischen Druckabfall über den dem Bioreaktor einschließt, wodurch überschüssige Biomasse und ausgefälltes anorganisches Material beseitigt werden.

2. Verfahren nach Anspruch 1, bei dem das Trägermaterial, durch welches das zu reinigende Wasser hindurchgeleitet wird, eine hohe spezifische Biofilmoberfläche aufweist, die einen intensiven Kontakt zwischen Luft und Wasser ermöglicht.

3. Verfahren nach Anspruch 1 oder 2, bei dem das zu reinigende Wasser durch Trägermaterial hindurchgeleitet wird, das fein zerteilt ist, wobei es sich bei diesem Material beispielsweise um Sand, Anthrazit oder Aktivkohle, vorzugsweise Sand, handelt.

4. Verfahren nach einem der vorhergehenden Ansprüche, bei dem das zu reinigende Wasscr durch Trägermaterial hindurchgeleitet wird, bei dem es sich um Sand mit einer Teilchengröße von 1 ½ mm bis 2 ½ mm handelt.

5. Verfahren nach einem der vorhergehenden Ansprüche, bei dem das Luft/Wasser-Verhältnis zwischen 0,1 und 0,5, vorzugsweise zwischen 0,3 und 0,5, liegt.

6. Verfahren nach einem der vorhergehenden Ansprüche, bei dem die hydraulische Flächenbelastung bezogen auf das Volumen an vorhandenem Wasser zwischen 5 und 15 m³/m²/h liegt.

7. Verfahren nach einem der vorhergehenden Ansprüche, bei dem die organische Belastung niedriger als das Beseitigungsvermögen ist.

8. Verfahren nach einem der vorhergehenden Ansprüche, bei dem die hydraulische Verweildauer zwischen 1 und 10 Minuten, vorzugsweise zwischen 1,5 und 3 Minuten, beträgt.

9. Verfahren nach einem der vorhergehenden Ansprüche, bei dem das zu reinigende Wasser Grundwasser ist.

10. Verfahren nach einem der vorhergehenden Ansprüche, bei dem flüchtige Verbindungen, die auf diese Weise zu beseitigen sind, die Fraktion von Mineralölen mit geringerem Gewicht, Benzol, Toluol, Ethylbenzol, Xylol und Naphthalen sind.

11. Verfahren nach einem der vorhergehenden Ansprüche, bei dem die nichtflüchtigen Komponenten, die zu beseitigen sind, Phenol, die schwerere Fraktion von Mineralölen und einige der polyzyklischen aromatischen Verbindungen sind.

## Revendications

1. Méthode de purification biologique de l'eau comprenant le passage d'une eau polluée au travers d'une matière support dans un appareil muni d'une aération et d'un ou plusieurs compartiments reliés en parallèle, ces compartiments étant munis d'entrées et sorties et contenant un remplissage constitué par une matière support sur laquelle et entre laquelle sont présents des microorganismes, les polluants étant convertis par les microorganismes dans le biofilm sur la matière support, caractérisée en ce que l'eau et l'air pollués traversent tous deux la matière support de haut en bas, l'air formant la phase continue de telle façon que le rapport air:eau ne dépasse pas 1:1, la charge hydraulique de la surface de l'appareil étant choisie entre 0,5 et 30 m³/m²/h et la matière support étant choisie de telle sorte que l'on obtienne approximativement un caractère d'écoulement idéal pour le procédé, ladite méthode incluant éventuellement une étape de rinçage de la matière support avec une chute de pression spécifique dans le bioréacteur et ainsi élimination de la biomasse en excès et de la matière minérale précipitée.

2. Procédé selon la revendication 1, dans lequel la matière support que traverse l'eau à purifier a une aire superficielle spécifique de biofilm élevée permettant un contact intense entre l'air et l'eau.

3. Méthode selon la revendication 1 ou 2, dans laquelle l'eau à purifier traverse une matière support finement divisée, ladite matière étant par exemple du sable, de l'anthracite ou du charbon actif, de préférence du sable.

4. Méthode selon une quelconque des revendications qui précèdent, dans laquelle l'eau à purifier traverse une matière support constituée par du sable dont les particules ont une dimension de 1,5 à 2,5 mm.

5. Méthode selon une quelconque des revendications qui précèdent, dans laquelle le rapport air/eau est situé entre 0,1 et 0,5, de préférence entre 0,3 et 0,5.

6. Méthode selon une quelconque des revendications qui précèdent, dans laquelle la charge hydraulique de la surface basée sur le volume d'eau présent est située entre 5 et 15 m³/m²/h.

7. Méthode selon une quelconque des revendications qui précèdent, dans laquelle la charge organique est inférieure à la capacité d'élimination.

8. Méthode selon une quelconque des revendications qui précèdent, dans laquelle le temps de séjour hydraulique se situe entre 1 et 10 minutes, de préférence entre 1,5 et 3 minutes.

9. Méthode selon une quelconque des revendications qui précèdent, dans laquelle l'eau à purifier est de l'eau souterraine.

10. Méthode selon une quelconque des revendications qui précèdent, dans laquelle les composants volatils à éliminer de cette façon sont la fraction d'huiles minérales de plus faible masse, le benzène, le toluène, l'éthylbenzène, le xylène et le naphtalène.

11. Méthode selon une quelconque des revendications qui précèdent, dans laquelle les composants non volatils à éliminer sont le phénol, la fraction plus lourde d'huiles minérales et certains composés aromatiques polycycliques.
